(19) Europäisches Patentamt / European Patent Office / Office européen des brevets

(11) **EP 3 903 075 B1**

(12) **EUROPEAN PATENT SPECIFICATION**

(45) Date of publication and mention
of the grant of the patent:
**17.07.2024 Bulletin 2024/29**

(21) Application number: **19700643.0**

(22) Date of filing: **08.01.2019**

(51) International Patent Classification (IPC):
*G01J 3/26* (2006.01)     *G01J 3/44* (2006.01)
*G01J 3/02* (2006.01)     *G01J 3/06* (2006.01)
*G02B 26/00* (2006.01)

(52) Cooperative Patent Classification (CPC):
**G01J 3/26; G01J 3/0272; G01J 3/06; G01J 3/44;
G02B 26/001**

(86) International application number:
**PCT/EP2019/050288**

(87) International publication number:
**WO 2020/143904 (16.07.2020 Gazette 2020/29)**

(54) **TUNABLE FABRY-PEROT SPECTROMETER BASED ON MEMS TECHNOLOGY**

ABSTIMMBARES FABRY-PEROT-SPEKTROMETER AUF DER GRUNDLAGE EINER MEMS-TECHNOLOGIE

SPECTROMÈTRE FABRY-PEROT ACCORDABLE FONDÉ SUR UNE TECHNOLOGIE MEMS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.11.2021 Bulletin 2021/44**

(73) Proprietor: **Huawei Technologies Co., Ltd.
Longgang District,
Shenzhen, Guangdong 518129 (CN)**

(72) Inventors:
• **BEN AMRAM, Haim
80992 Munich (DE)**
• **SHAVIT, Alon
80992 Munich (DE)**
• **MAMAN, Shuki
80992 Munich (DE)**
• **HALEAVA, Emir
80992 Munich (DE)**
• **EL BAHAR, Roni
80992 Munich (DE)**

(74) Representative: **Pfenning, Meinig & Partner mbB
Patent- und Rechtsanwälte
Theresienhöhe 11a
80339 München (DE)**

(56) References cited:
DE-A1- 102009 021 936     US-A1- 2003 011 864
US-A1- 2008 187 011     US-A1- 2018 205 915

**Description**

BACKGROUND

The present invention, in some embodiments thereof, relates to a spectrometer, and, more specifically, but not exclusively, to a Fabry-Perot spectrometer that is tunable using MEMS technology.

Raman spectroscopy is an optical technique based on inelastic scattering of light by vibrating molecules and can provide chemical fingerprints of cells, tissues or biofluids. The high chemical specificity, minimal or lack of sample preparation and the ability to use advanced optical technologies in the visible or near-infrared spectral range (lasers, microscopes, fiber-optics) have recently led to an increase in medical diagnostic applications of Raman spectroscopy. The key hypothesis underpinning this field is that molecular changes in cells, tissues or biofluids, that are either the cause or the effect of diseases, can be detected and quantified by Raman spectroscopy.

Raman spectroscopy is also being increasingly used in the fields of food analysis and inspection, e.g., in detecting pathogens. It is highly accurate, quick, and noninvasive. The investigation and monitoring of food processing is important because most of the foods humans eat today are processed in various ways.

A typical spectroscopy system for these fields and others includes a light source (*i.e.,* the object that is being studied) and a receiving system. In order to separate the light from the light source into spectral components and to detect particular wavelengths of light emitted from the light source, a spectroscope is needed. Many such spectroscopes have been developed.

One device that has been historically used for analysis of emitted light is a Fabry-Perot interferometer. A classic Fabry-Perot interferometer comprises a pair of partially reflective optical flats spaced micrometers to centimeters apart. The reflective surfaces are configured facing each other. Illumination is provided by a diffuse source set at the focal plane of a collimating lens. As a ray passes through the paired optical flats, it is multiply reflected to produce multiple transmitted rays which are collected by a focusing lens and transmitted to an optical detector. Classical Fabry-Perot interferometers are effective for analyzing light of a particular wavelength.

A fixed gradient Fabry-Perot filter may be used to permit scanning of multiple wavelengths within a Fabry-Perot interferometer. The configuration of a gradient Fabry-Perot filter is set in the manufacturing process. After it is prepared and installed, it cannot be tuned or changed. Similarly, known microelectromechanical system (MEMS) Fabry-Perot devices are tunable only to scan for a single wavelength. In order to scan for 1,000 wavelengths, for example, with such a device, it is necessary to modify the positioning of the device for each capture frame. Scanning 1,000

wavelengths requires 1,000 positioning steps and optical detection of 1,000 frames. At the end of the process, a calculation is necessary to integrate the 1,000 frames into a single spectrum. DE 10 2009 021936 A1 discloses an optical filter comprising a first partially transparent mirror, a second partially transparent mirror and a deformable spacer arranged between the first partially transparent mirror and the second partially transparent mirror. A distance between the first partially transparent mirror and the second partially transparent mirror is variable in dependence on a voltage applied to the optical filter.

US 2008/187011 A1 discloses an inhomogeneous optical cavity is tuned by changing its shape, such as by changing reflection surface positions to change tilt angle, thickness, or both. Deformable components such as elastomer spacers can be connected so that, when deformed, they change relative positions of structures with light-reflective components such as mirrors, changing cavity shape. Electrodes can cause deformation, such as electrostatically, electromagnetically, or piezoelectrically, and can also be used to measure thicknesses of the cavity. The cavity can be tuned, for example, across a continuous spectrum, to a specific wavelength band, to a shape that increases or decreases the number of modes it has, to a series of transmission ranges each suitable for a respective light source, with a modulation that allows lock-in with photosensing for greater sensitivity, and so forth. The optical cavity can be a linear variable filter fabricated on the photosensitive surface of a photosensing component such as a photosensor array or a positionsensitive detector.

US 2018/205915 A1 discloses a tunable Micro-Electro-Mechanical (MEMS) Etalon system including: a functional layer patterned to define a suspension structure for suspending a first mirror being an aperture mirror of the Etalon, an aperture mirror coupled to the suspension structure, and a back layer including a second mirror, being a back mirror of the Etalon. The functional layer may be located above the back layer and the back layer may include spacer structures protruding therefrom towards the aperture mirror to define a minimal gap between the aperture mirror and the back mirror and prevent collision between them. The aspect ratio between the width of the etalon/mirrors may be high (e.g. at least 500), and the minimal gap/distance between the mirrors may be small in the order of tens of nanometers (nm). Accordingly, in some implementations the parallelism between the aperture mirror and the back mirror is adjustable to avoid chromatic artifacts associated with spatial variations in the spectral transmission profile across the etalon.

Further prior art is disclosed by US 2003/011864 A1.

## SUMMARY

Using prior art devices for detection of multiple wavelengths of emitted light is thus costly and laborious. Prior art devices are thus unable to address efficiently the emergent applications of Raman spectroscopy in these and other fields.

It is an object of the present invention to provide a device and a method for quick and efficient optical scanning at low size and low cost. Furthermore, it is an object of the present invention to devise a scanning device that is easily tunable, to enable scanning a large range of wavelengths at once, so that the wavelength or wavelengths emitted by the material being studied can be quickly and efficiently identified.

The foregoing and other objects are achieved by the features of the independent claims. Further implementation forms are apparent from the dependent claims, the description and the figures.

According to a first aspect, a microelectromechanical (MEMS) spectrometer is provided as defined in claim 1.

In a first possible implementation of the MEMS spectrometer according to the first aspect, the MEMS actuator converts a voltage into a mechanical output for performing the inclining. In such embodiments, the MEMS actuator comprises a plurality of pairs of electrodes defining the voltage therebetween. Advantageously, the MEMS actuator may control the inclining using correspondingly fewer mechanical structures.

According to the invention, a MEMS silicon substrate, first and second MEMS electrodes, and at least first and second MEMS springs are affixed to the MEMS silicon substrate, and the first and second MEMS electrodes are mechanically connected to the first and second MEMS springs. An adjustment of voltage between first and second MEMS electrodes causes a corresponding MEMS spring to flex and change at least one of the minimum Euclidean distance and the maximum Euclidean distance. Optionally, the MEMS silicon substrate comprises a central aperture formed around the optical detector. Advantageously, placement of the optical detector within the central aperture enables the device to be manufactured compactly.

In a third possible implementation of the MEMS spectrometer according to the first aspect as such or according to the first or second implementations of the first aspect, the MEMS spectrometer includes at least one of an optical controller, a voltage controller, a current controller, a piezo-electric controller, and an inductive controller for controlling the positioning of the upper and lower substantially transparent substrates. Advantageously, the specific mechanism for controlling the positioning of the upper and lower substantially transparent substrates can be adapted according to design preferences.

In a fourth possible implementation of the MEMS spectrometer according to the first aspect as such or according to the first, second, or third implementations of the first aspect, the plurality of wavelengths comprise a minimum wavelength and a maximum wavelength, the minimum Euclidean distance is equivalent to the minimum wavelength multiplied by n and divided by 4, and the maximum Euclidean distance is equivalent to the maximum wavelength multiplied by $n$ and divided by 4, n being an integer. Advantageously, the range of wavelengths that are detected in a particular scan may be predetermined according to the minimum and maximum Euclidean distance. Optionally, a processor is adapted to calculate a target minimum Euclidean distance and a target maximum Euclidean distance between the upper and lower substantially transparent substrates required to detect transmission of a desired spectrum of wavelengths, wherein the desired spectrum of wavelengths comprises a target minimum wavelength and a target maximum wavelength. The processor is also adapted to calculate the target minimum Euclidean distance as the target minimum wavelength multiplied by n and divided by 4, and the target maximum Euclidean distance as the target maximum wavelength multiplied by n and divided by 4. The processor is further configured to instruct the MEMS actuator to incline at least one of the upper and lower substantially transparent substrates in relation to the other and thereby adjust the minimum and maximum Euclidean distances according to the desired spectrum of wavelengths. Advantageously, the calculations and instructions by the processor may reduce the number of scans and/or the amount of time required to scan a range of wavelengths.

In a fifth possible implementation of the MEMS spectrometer according to the first aspect as such or according to the first, second, third, or fourth implementations of the first aspect, a device is configured to transmit light of a predetermined wavelength through the upper and lower substantially transparent substrates. A processor is configured to calibrate a correlation between the minimum and maximum Euclidean distances and the capture of the plurality of different wavelengths based on capturing of said light by the optical detector. Advantageously, the calibration can provide a basis for identification of a scanned wavelength, thereby reducing the number of scans and/or the amount of time required to scan a range of wavelengths.

In a sixth possible implementation of the MEMS spectrometer according to the first aspect as such or according to the first, second, third, fourth, or fifth implementations of the first aspect, the spectrometer is configured within a battery-operated mobile Raman scattering device. Advantageously, incorporation into a battery-operated mobile device allows the device to be used in a large number of contexts and applications.

According to a second aspect, a method according to claim 9 is provided.

Furthermore, the MEMS actuator can be operated at low cost and at low size.

In a first possible implementation of the second aspect, the MEMS actuator comprises a plurality of pairs of electrodes defining a voltage therebetween, and the step of using the MEMS actuator comprises converting the voltage into a mechanical output for performing the inclining. Optionally, the MEMS actuator comprises a plurality of pairs of electrodes defining a voltage therebetween, the step of using the MEMS actuator comprises converting the voltage into a mechanical output for performing the inclining. Advantageously, the MEMS actuator may control the inclining using electrical controls and correspondingly fewer mechanical structures. Optionally, the method further comprises measuring a capacitive readout between respective paired electrodes, and calculating based on the capacitive readout the distance between the respective paired electrodes.

According to the invention, the MEMS spectrometer comprises a MEMS machine comprising a MEMS silicon substrate, first and second MEMS electrodes, and at least first and second MEMS springs affixed to the MEMS silicon substrate. The first and second MEMS electrodes are mechanically connected to the first and second MEMS springs. The adjusting step comprises adjusting the voltage between first and second MEMS electrodes to thereby cause a corresponding MEMS spring to flex, and change at least one of the minimum Euclidean distance and the maximum Euclidean distance.

In a third possible implementation of the method according to the second aspect as such or according to the first or second implementation, the plurality of different wavelengths comprises a minimum wavelength and a maximum wavelength, the minimum Euclidean distance is equivalent to the minimum wavelength multiplied by n and divided by 4, and the maximum Euclidean distance is equivalent to the maximum wavelength multiplied by n and divided by 4, $n$ being an integer. Advantageously, the range of wavelengths that are detected in a particular scan may be predetermined according to the minimum and maximum Euclidean distance.

In a fourth possible implementation of the method according to the second aspect as such or according to the first, second, or third implementations, the method further comprises calculating a target minimum Euclidean distance and a target maximum Euclidean distance required to detect transmission of a desired spectrum of wavelengths. The desired spectrum of wavelengths comprise a target minimum wavelength and a target maximum wavelength, and said calculating comprises calculating the target minimum Euclidean distance as the target minimum wavelength multiplied by n and divided by 4, and calculating the target maximum Euclidean distance as the target maximum wavelength multiplied by n and divided by 4. The method further comprises using the MEMS actuator to incline at least one of the upper and lower substantially transparent substrates in relation to the other and thereby adjust the minimum and maximum Euclidean distances according to the desired spectrum of wavelengths. The detecting step further comprises detecting the transmission of the desired spectrum of wavelengths. Advantageously, the calculations by the processor may reduce the number of scans and/or the amount of time required to scan a range of wavelengths.

In a fifth possible implementation of the method according to the second aspect as such or according to the first, second, third, or fourth implementations, the method further comprises analyzing the range of transmitted wavelengths captured by the optical detector; selecting a subset of the desired spectrum of the transmitted wavelengths; calculating a second target minimum Euclidean distance and a second target maximum Euclidean distance required to detect transmission of the subset of the desired spectrum of wavelengths at a desired resolution; using the MEMS actuator to incline at least one of the upper and lower substantially transparent substrates in relation to the other and thereby adjust the minimum and maximum Euclidean distances according to the calculated subset of the desired spectrum of wavelengths at the desired resolution, transmitting a second transmission of the plurality of wavelengths through the upper and lower substantially transparent substrates; and capturing with the optical detector the transmission of the subset of the desired spectrum of wavelengths at the desired resolution. Advantageously, the method thus allows for scanning a wide spectrum of wavelengths at low resolution, and a narrower spectrum of wavelengths at higher resolution, thereby enabling efficient identification of wavelengths of transmitted light.

In a sixth possible implementation of the method according to the second aspect as such or according to the first, second, third, fourth, or fifth implementations, the method further comprises comprising transmitting light of a predetermined wavelength through the upper and lower substantially transparent substrates, detecting transmission of said light with the optical detector, and calibrating a correlation between the minimum and maximum Euclidean distances and the transmission of the plurality of different wavelengths based on the detected transmission of said light. Advantageously, the calibration can provide a basis for identification of a scanned wavelength, thereby reducing the number of scans and/or the amount of time required to scan a range of wavelengths.

One advantage of the disclosed embodiments is that the MEMS system permits creation of a variable Fabry-Perot device with a configurable range of wavelengths. Thus, multiple wavelengths can be scanned with a single device. Furthermore, the range of scanned wavelengths is tunable. Thus, a user can first scan a wider range of wavelengths, select regions of interest, and conduct a more accurate scan within the relevant optical range. The tuning of the device is fast, reliable, and repeatable.

Another advantage of the disclosed embodiments is that the MEMS actuator can be operated using low power consumption. Thus, the disclosed embodiments can be used within a handheld battery operated device.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1 is a perspective view of a schematic representation of a device in accordance with embodiments of the present invention;

FIG. 2A is a schematic representation of a microelectromechanical (MEMS) actuator integrated with the device in accordance with embodiments of the present invention, with a glass cover;

FIG. 2B is a schematic representation of the MEMS actuator of Fig. 2A with the glass cover removed;

FIG. 3 is a schematic representation of the device of FIGS. 1 and 2A and 2B, with first and second substantially transparent substrates at a uniform distance di from each other;

FIG. 4 is a schematic representation of the device of FIGS. 1-3 with the first and second substantially transparent substrates inclined relative to each other and defining distances $d_2$ and $d_3$ therebetween;

FIG. 5A is a representative graph showing optical output of a scan of light of different wavelengths using a device according to embodiments of the invention;

FIG. 5B is a representative graph illustrating identification of sectors of absorption within the graph of FIG. 5A, for examination at a higher resolution, according to embodiments of the invention;

FIG. 5C is a representative graph showing optical output of a scan of light of different wavelengths at higher resolution than the output measured in FIGS. 5A and 5B, according to embodiments of the invention;

FIG. 6 is a flow chart illustrating a method of scanning for light of particular frequencies, according to embodiments of the invention; and

FIG. 7 is a schematic representation of a handheld, battery operated Raman scattering device, according to some embodiments of the present invention.

DETAILED DESCRIPTION

The present invention, in some embodiments thereof, relates to a spectrometer, and, more specifically, but not exclusively, to a Fabry-Perot spectrometer that is tunable using MEMS technology.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

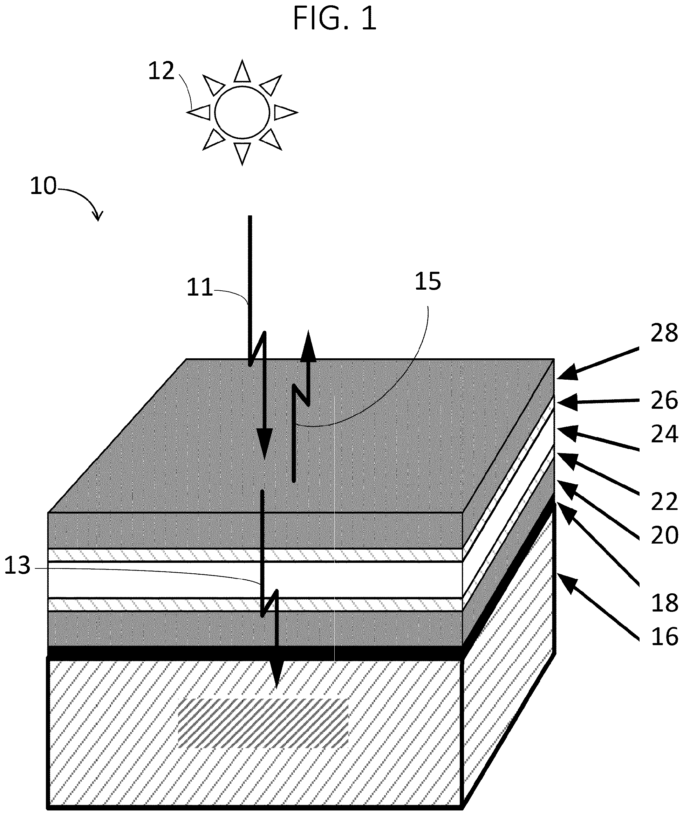

Reference is now made to FIG. 1, which is a schematic representation of a device 10 for spectrometry, according to some embodiments of the present invention. Device 10 schematically represents various elements of a Fabry-Perot interferometer. The Fabry-Perot interferometer is configured to transmit light received from light source 12 (represented schematically by a sun symbol). The light source may be any device capable of emitting light transmitted through a Fabry-Perot interferometer, for example, a laser, an incandescent or fluorescent light, an LED, and/or a Raman scattering device. An optical detector (not shown in FIG. 1) may be mounted in or below the device 10. The optical detector receives light transmitted through the device 10 and converts it into an electrical signal. The optical detector may include any device for optical detection known to those of skill in the art or that may later become known, for example, a photon detector, a photoconductive detector, a photovoltaic detector, a photoemissive detector, a photodiode, a photomultiplier, a phototransistor, a thermal detector, a bolometer, a thermistor, a thermocouple, and/or a pyroelectric detector.

The device may further include computing equipment (not shown) attached to the optical detector for analyzing the absorption data. The computing equipment may include a computer readable storage medium (or media) having computer readable program instructions thereon for causing a processor to carry out aspects of the present invention. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

For ease of reference, device 10 is depicted as having vertically stacked layers. However, as one of skill in the art would recognize, the device 10 may be oriented as having horizontally stacked layers as well. Indeed, it is expected that, for ease of operation, the device 10 may often be configured with horizontally spaced layers. Furthermore, while the elements of device 10 are described below as being below or above each other, when the device is oriented horizontally, the elements are correspondingly oriented alongside each other. As used in the present application, the term "below" refers to the direction from the light source 12 toward base substrate 16 (the direction of arrows 11 and 13), and the term "above" refers to the direction from base substrate 16 to the light source 12 (the direction of arrow 15).

Device 10 includes a base substrate 16. Base substrate 16 is of a suitable material for supporting and locating the other elements of device 10, as described herein. In one embodiment, base substrate 16 is a silicon wafer. The base substrate, as well as the elements located above the base substrate, may be of any dimension capable of performing the actions described below, for instance the width of the base substrate is approximately 2-3 mm. Isolation layer 18 is located above base substrate 16.

Lower substantially transparent substrate 20 and upper substantially transparent substrate 28 constitute two paired panels through which light is transmitted and reflected, in the manner of a typical Fabry-Perot interferometer. The term "substantially transparent" refers to the capacity of the substrates to both permit light to be transmitted therethrough and to reflect light therefrom, and to transmit a very high percentage of incident light when in resonance. The reflectivity of the substantially transparent substrates can be 80% or above, or even 95% or above, or even 98% or above. The specific reflectivity of the substantially transparent substrates 20, 28 is not essential to the functioning of the device. The range of wavelengths to which the substrates are substantially transparent will typically include at least the range between 400 nm and 1800 nm, but specifically varies based on the configuration of the substrates, as will be discussed below.

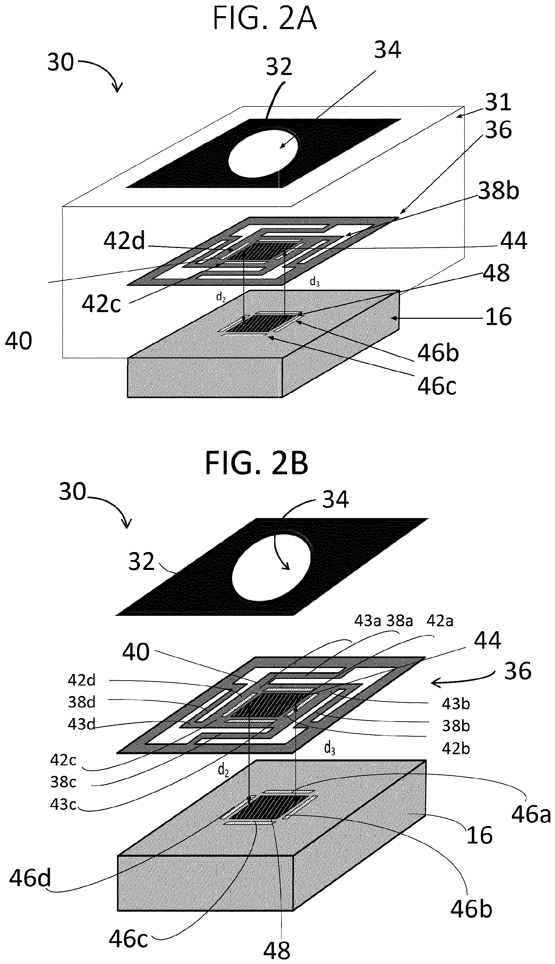

Optionally, the substantially transparent substrates 20, 28 are made of glass. The substantially transparent substrates 20, 28 are coated with a semi-transparent layer 22, 26, for instance, a 15 nm thick gold layer. The substantially transparent substrates 20, 28 are mounted such that an air gap 24 is formed therebetween. For example, one or both of substrates 20, 28 can be supported by an external scaffolding (not shown), and/or glass frame 31 as shown in FIG. 2A. The air gap defines a width di that may be approximately 1 nanometer, or within a range of between zero to up to 10 nanometers. In FIG. 1, the substrates 20, 28 are oriented substantially parallel to each other, so that the width of the air gap 24 is constant across the entire device 10.

Arrow 11 shows light transmitted from light source 12 into the device 10, and arrow 13 shows light being transmitted through the device 10 and toward the optical detector. Arrow 15 shows the direction of light being reflected off of the substantially transparent substrates 20, 28, back toward the light source 12.

FIGs. 2A and 2B schematically depict a microelectromechanical system (MEMS) actuator 30 into which the device 10 of FIG. 1 is integrated. MEMS actuator 30 (1) allows light to pass therethrough to the Fabry-Perot interferometer and from the interferometer to the optical detector; and (2) causes the substrates 20, 28 to incline relative to each other, in the manner described below.

With respect to passage of light, MEMS actuator 30 comprises optical filter 32; MEMS silicon substrate 36; and base substrate 16. Optical filter 32 contains a central aperture 34. The central aperture 34 is sized to fit around substantially transparent substrates 20, 28 and thereby permit light to pass through the optical filter 32 and to the substantially transparent substrates 20, 28. MEMS silicon substrate 36 supports MEMS optical layer 44 at a central portion thereof, and base substrate 16 supports optical layer 48. Optical layer 44 within MEMS silicon substrate 36, and optical layer 48 within base substrate 16, are oriented parallel to each other and transmit light passing through substrates 20. Optical layers 44, 48 may be CMOS image sensors. Optical layer 44 and optical layer 48 may be part of the optical detector and/or may be optically or electrically connected to the optical detector.

In the embodiments of FIG. 2A, MEMS actuator 30 includes glass frame 31. Glass frame 31 provides structural support and protection for the individual elements of MEMS actuator 30, and may also provide structural support for other elements of device 10, such as substrates 20, 28.

With respect to inclining of the substrates 20, 28, MEMS silicon substrate 36 comprises a plurality of MEMS springs 38a-d. In the embodiments depicted in FIGS. 2A and 2B, there are four L-shaped springs 38a-d. As can be recognized by one of skill in the art, the springs may be of any type or shape usable in MEMS, for example, double-folded beam, U-shaped, and/or fish hook. Furthermore, the number of springs can similarly vary. The springs 38 connect between MEMS silicon substrate 36 and MEMS inner frame 40.

MEMS inner frame 40 further comprises a plurality of sets of paired electrical electrodes 42a-d. In the embodiments shown in FIGS. 2A and 2B, MEMS inner frame 40 is square-shaped, and electrodes 42a-d are oriented on each edge of the square, with springs 38a-d attaching to inner frame 40 at corners 43a-d thereof. Electrodes 46a-d are situated on base substrate 16 and define a voltage between corresponding electrodes 42a-d. Optionally, electrodes 42a-d and 46a-d are configured as capacitor plates.

Each pair of electrodes 42, 46 is connected via a circuit to a controller (not shown) configured to regulate the voltage therebetween. In particular, an electrical connector (not shown) is applied to electrodes 46. The electrical connector is typically attached to the MEMS silicon substrate 36 and/or the inner frame 40. In some embodiments, the controller is one of one of an optical controller, an AC voltage controller, a current controller, a piezo-electric controller, and an inductive controller.

The location of electrodes 42 is controlled electrostatically. Applying a lowly varying voltage between two electrodes 42, 46 results in a force that pulls the MEMS silicon substrate 36 toward the substrate 16 and bends the springs 38.

Specifically, adjusting the voltage between a respective pair of electrodes 42, 46 causes a corresponding change in the Euclidean distance between the electrodes. As used in the present disclosure, the term "Euclidean distance" refers to the shortest straight line distance between a point on electrode 42 and a corresponding point on electrode 46, as measured along an axis parallel to the axis of travel of light from the light source 12 to the optical detector. In general, as the voltage increases, the Euclidean distance decreases, and as the voltage decreases, the Euclidean distance increases. This correlation is based on Coulomb's law that the electrostatic force between two plate capacitors is inversely proportional to the distance between the plates and parabolic with the applied voltage. The mechanism by which the Euclidean distance can increase or decrease is through flexing or relaxation of springs 38. An increase in voltage causes flexing of springs 38, so that the distance decreases; and a decrease in voltage causes relaxing of springs 38, so that the distance decreases.

MEMS actuator 30 may be mechanically connected to lower substantially transparent substrate 20, such that whenever MEMS silicon substrate 36 moves or tilts, lower substantially transparent substrate 20 moves or tilts with the MEMS silicon substrate 36. Alternatively, MEMS actuator 30 may be mechanically connected to upper substantially transparent substrate 28.

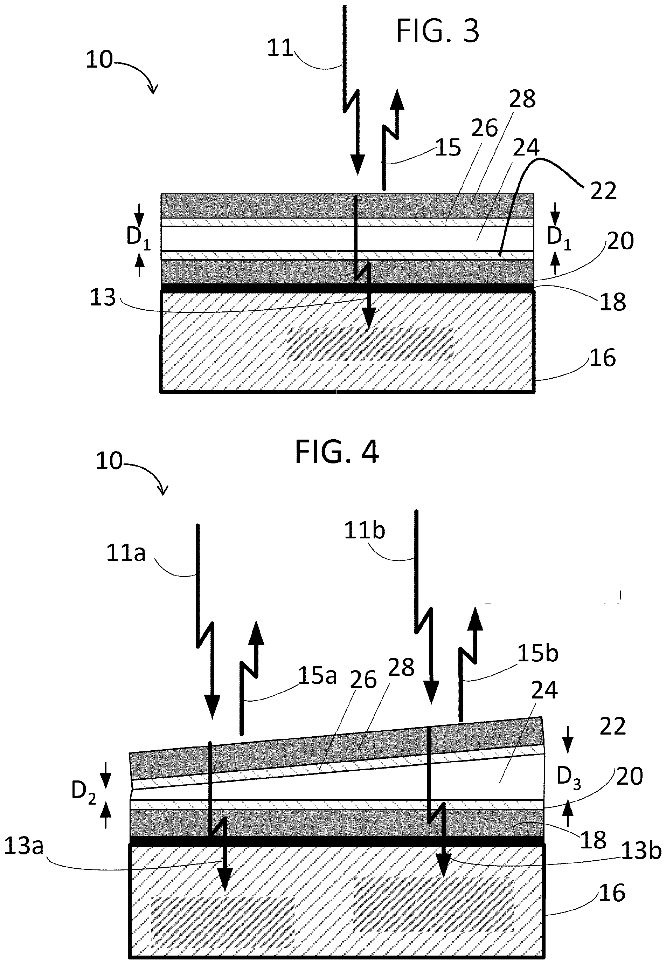

Referring now to FIGS. 3 and 4, FIG. 3 shows the device 10 in which the voltage across each of the electrodes 42, 46 is identical, and thus the distance between electrodes 42, 46 is uniform, represented as $D_1$. By contrast, in the state of FIG. 4, the MEMS springs 38 are flexed on one side of the device 10, and are relaxed on the other side of the device 10. As a result, a gradient is developed between substrate 20 and substrate 28. As a result, different portions of substrates 20, 28 define different Euclidean distances therebetween, represented as $D_2$ and $D_3$.

In the state depicted in FIG. 4, $D_2$ refers to the smaller of the two distances between substrates 20, 28, and $D_3$ refers to the larger of the two distances. In some embodiments, the difference between $D_2$ and $D_3$ may be between zero and 700 nanometers.

Distances $D_2$ and $D_3$ may be measured as a function of the capacitive readout between paired electrodes 42, 46. When a voltage is added to only one electrode pair, for example, 42a and 46a, the distances may be measured based on the capacitive readout between those paired electrodes. In addition, a more accurate location readout could be calculated by comparing the capacitance of one capacitor pair 42, 46 with a second capacitor pair 42, 46, for example, the capacitance of 42a and 46a, versus 42c and 46c. The capacitance can be measured with any appropriate device known to those of skill in the art, such as an LCR meter or a bridge circuit.

When device 10 is configured in the position shown in FIG. 4, device 10 absorbs light at a range of wavelengths $\lambda$. That is, even though normally a Fabry-Perot interferometer requires that the two substantially transparent substrates be perfectly parallel in order to effect transfer of light, the requirement of parallelism has sufficient tolerance to permit transfer of light when the substrates are oriented with the described distances $D_2$, $D_3$. This is because the substrates must be parallel only over a width corresponding to a few wavelength orders of the transmitted light. When the device 10 is significantly wider than a few wavelength orders of transmitted light, device 10 it permits transmission of a larger range of wavelengths.

For example, in the configuration of FIG. 3, the air gap between substrates 20, 28, could be 400 nm. In that configuration, a classic Fabry-Perot interferometer transmits light at 800 nm, such that the air gap $D_1$ is $\lambda/2$. The minimum width of an interferometer that transmits light at a wavelength $\lambda$ is between a few and approximately 10 wavelength orders of the transmitted light - e.g., up to 8 $\mu$m (= 10*800 nm). In device 10, the width of the substantially transparent substrates 20, 28 may be 2 mm, or, in some embodiments, up to 3 mm. A 3 mm device is over 300 times as wide as the minimum width required to transmit light at 800 nm. Thus, in the configuration of FIG. 4, at various sections of the width of the device 10, the device similarly acts as a parallel interferometer for corresponding wavelengths, permitting light of those wavelengths to be transmitted. The transmission of multiple wavelengths is illustrated by arrows 11a, 13a, and 15a schematically representing the transmission and reflection of light of a lower wavelength, and arrows 11b, 13b, and 15b schematically representing the transmission and reflection of light of a relatively larger wavelength.

The specific range of wavelengths absorbed by device 10 is dependent on the distances $D_2$ and $D_3$. In particular, the range of wavelengths is linearly related to the distances $D_2$ and $D_3$ in accordance with the following relationship:

$$\Delta = (\lambda_{\max} - \lambda_{\min})*n/4$$

where $\Delta$ denotes the difference between $D_2$ and $D_3$, $\lambda_{\max}$ is the maximum wavelength of light that can be detected by the device 10 in that configuration, $\lambda_{min}$ is the minimum wavelength of light that can be detected by the device 10 in that configuration, and n is an integer. Commonly, n equals 2. For example, when $D_2$ is 200 nm, and $D_3$ is 900 nm, the minimum wavelength that is detected by the device is 400 nm, and the maximum wavelength that is detected is 1800 nm. In such a circumstance, when the MEMS device has a width of 2 mm, the angle defined by $D_2$, $D_3$, and the MEMS device is arctan (700nm/2 mm) = around 20 millidegrees.

The resolution of the optical detection also depends on $\Delta$. When $\Delta$ is a relatively high value, *e.g.*, 700 nm, the range of wavelengths that can be scanned is high, but the resolution of the detected peaks is relatively low. By contrast, when $\Delta$ is relatively low, the range of wavelengths that can be scanned is narrower, but the resolution of the detected peaks is high.

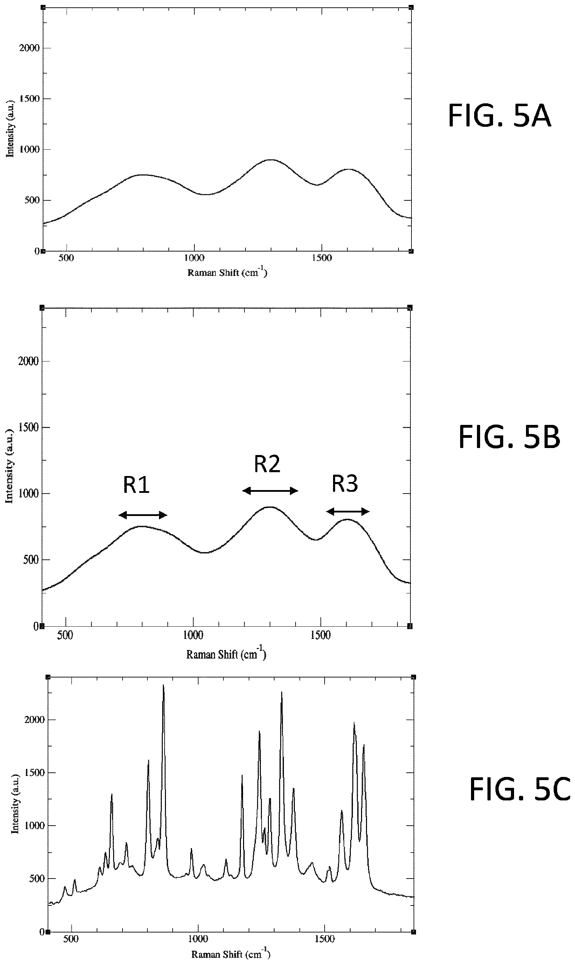

Referring now to FIGS. 5A-C, FIGS. 5A-C illustrate a graphical output of a series of scans that can be taken in order to identify a wavelength or series of wavelengths which are being transmitted from light source 12. Referring to FIG. 5A, an initial scan is taken with $D_2$ at 200 nm, $D_3$ at 900nm, and the scan range between 400 nm and 1800 nm. The optical detector converts the transmitted light into an electrical signal and forwards the electrical signal to a processor. The processor and/or computing equipment generates a graphical representation of the intensity of light transmitted for each wavelength in the range. In the example of FIG. 5A, the source of light is a Raman Shift and measured on the x-axis in the units of $cm^{-1}$. The y-axis measures quantity of detected light at that wavelength and is measured in arbitrary units (a.u.). As indicated in FIG. 5B, three regions R1, R2, and R3 of relatively high absorption were detected in the scan of FIG. 5A. The ranges of wavelengths of high absorption are, approximately, 600 to 900 nm; 1100 to 1400 nm, and 1500 to 1800 nm. Three additional scans may then be performed, with $\Delta$ reduced so as to decrease the range of wavelengths that can be scanned. Using the example depicted above of a MEMS device with a width of 2 mm, exemplary ranges for D2 and D3 and exemplary angles of the MEMS device and the substrates 20, 28 are set forth in Table I:

**Table I**

| Scan name | $D_2$ | $D_3$ | $n_{min}$ | $n_{max}$ | MEMS device angle (0) |
|---|---|---|---|---|---|
| Full range low resolution | 200nm | 900nm | 400nm | 1800nm | 0.020°=20m° |
| Region #1 high resolution | 300nm | 450nm | 600nm | 900nm | 0.0043°=4.3m° |
| Region #2 high resolution | 550nm | 700nm | 1100nm | 1400nm | 0.0043°=4.3m° |
| Region #3 high resolution | 750nm | 900nm | 1500nm | 1800nm | 0.0043°=4.3m° |

The processor and/or computing equipment may then combine the outputs of the three highresolution scans into a single high resolution output, as shown in FIG. 5C, with the wavelengths of maximum absorption more readily identifiable.

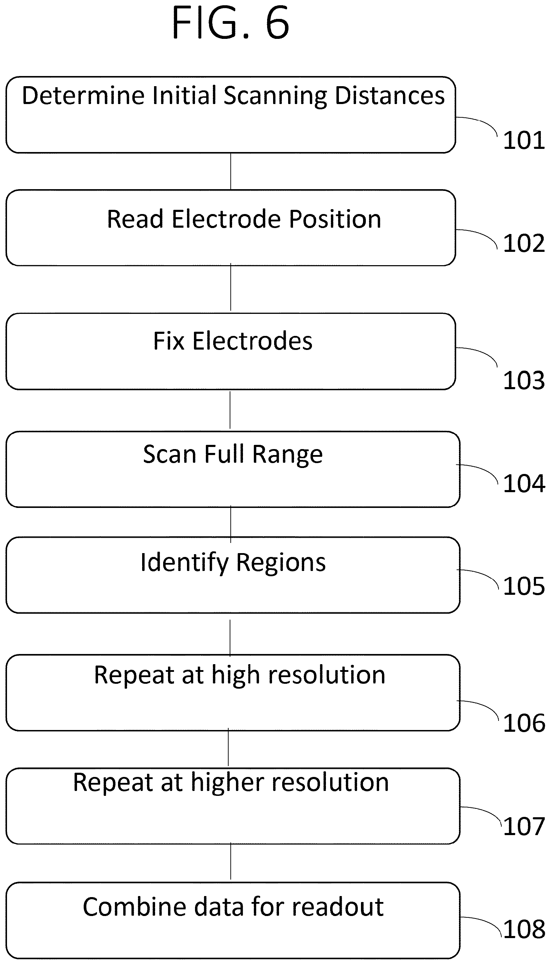

FIG. 6 depicts a flow chart illustrating how a user may use the device 10 in order to determine the wavelength(s) emitted by a light source 12, for example, as part of a Raman shift analysis. The flow chart illustrates how the device 10 may be efficiently used for scanning of a large range of wavelengths.

In 101, a user may adjust the initial distances $D_2$, $D_3$, for example, by controlling the voltage between electrode pairs 42, 46, as described above. This first adjustment may be based on an initial guess about the position and angle of the substrates 20, 28; i.e., it need not be based on known distances $D_2$ and $D_3$.

In 102, the computing device determines the positioning of the MEMS actuator 30, including distances $D_2$ and $D_3$. The computing device may perform the position readout through an electrical readout, by calculating the capacitance of each of the electrode pairs 42, 46, using, for example, an LCR reader or a bridge circuit. Alternatively or in addition, the computing device may determine the position based on an optical readout. The optical readout is conducted by performing an initial scan, and then adding pre-known accurate data onto the optical readout. For example, the pre-known data can be the absorption of a light source transmitting at a particular wavelength. The light source may be, for example, a laser, LED, or fluorescence. A processor may add the pre-known data to the data obtained from the optical readout. By adding the pre-known data, a user may calibrate the optical readout according to a known wavelength.

In 103, the computing device adjusts the distances $D_2$ and $D_3$ from the positions obtained in the position readout to the positions required to scan a specified range. The processor calculates a target minimum Euclidean distance and a target maximum Euclidean distance between the upper and lower substantially transparent substrates required to detect transmission of a desired spectrum of wavelengths. The processor may further be configured to instruct the MEMS actuator to incline at least one of the upper and lower substantially transparent substrates in relation to the other and thereby adjust the minimum and maximum Euclidean distances according to the desired spectrum of wavelengths.

In 104, light is transmitted through the device 10, and the computing device generates a full calibrated readout of the transmitted wavelengths for the entire range. The term "single transmission" as used in the application refers to a transmission such as that of step 104, with the distances $D_2$ and $D_3$ in set positions.

In 105, the user and/or the computing device identifies smeared peaks in the full calibrated readout of step 104, and determines on the basis thereof one or more subsets of the scanned wavelengths to scan at higher resolution.

In 106, steps 101 to 104 are repeated for each subset of the range, thereby making a full calibrated readout of the subset range with high resolution.

In 107, when even higher resolution is required, the range can be divided again, and steps 101-104 can be repeated again as necessary, until the desired resolution is reached.

In 108, the user may instruct the computing device to combine data from multiple scans in order to produce a readout or table showing all peaks. It is possible for the computing device to both mix high resolution peaks, or to combine low resolution and high resolution peaks, in order to obtain one integrated readout.

Advantageously, a user performing the method described above can scan an entire range of light, covering hundreds of nanometers in wavelengths, in just a few scans. It is not necessary to tune the device separately for each transmission of each separate wavelength.

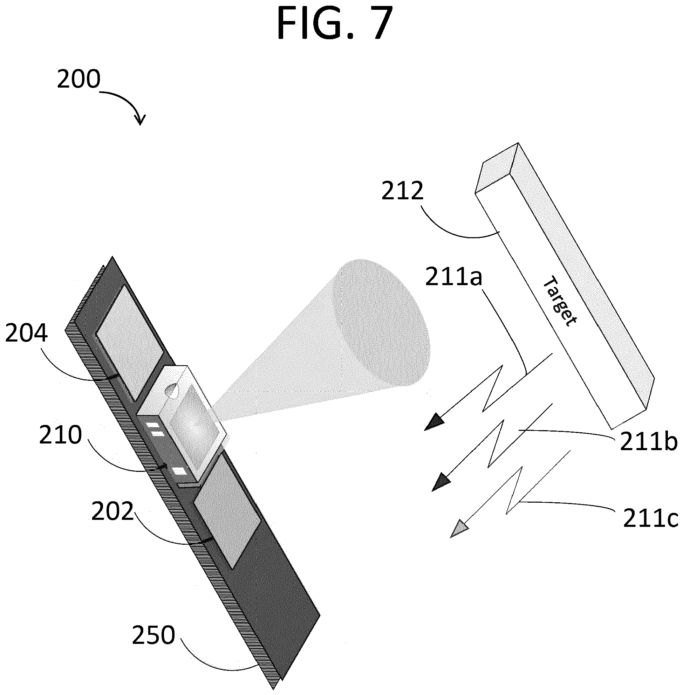

FIG. 7 schematically depicts device 210, which is another embodiment of the present disclosure. Device 210 is similar to device 10, and accordingly similar reference numerals are used to refer to similar elements, except that the numeral "2" is placed beforehand. Device 210 is used as part of a handheld Raman scattering detector 200. Handheld Raman scattering detector 200 includes base 250, which includes a power source. The power source can be solar panel 202, battery 204, or any other power source suitable for powering a handheld device. Handheld Raman scattering detector 200 may be integrated with a cellular phone or table device. Handheld Raman scattering detector 200 is used to detect Raman emissions from target 212, in the manner shown and described above. Target 212 can be any device that can be analyzed with Raman spectroscopy, including but not limited to cells, tissues, biofluids, or foods. Arrows 211a, 211b, and 211c represent light of different wavelengths that are emitted by target 212 and analyzed by device 210, in the manner described above.

The descriptions of the various embodiments of the present invention have been presented for purposes of illustration, but are not intended to be exhaustive or limited to the embodiments disclosed.

The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant MEMS technologies, including different types of MEMS springs, many relevant optical detectors, and many relevant computing devices and processors, will be developed and the scope of the terms MEMS, MEMS springs, optical detector, computing devices, and processors is intended to include all such new technologies a priori.

As used herein the term "about" refers to $\pm$ 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. The invention is defined by the appended claims.

**Claims**

1. A microelectromechanical (MEMS) spectrometer comprising:

   a substantially transparent upper substrate (20);
   a substantially transparent lower substrate (28);
   an optical detector mounted to capture light transmitted in a single transmission through the upper and lower substantially transparent substrates (20, 28) in a plurality of different wavelengths when a minimum Euclidean distance (D2) and a maximum Euclidean distance (D3) between the upper and lower substrates (20, 28) differ from one another; and
   a MEMS actuator (30) configured to incline at least one of the upper and lower substantially transparent substrates (20, 28) in relation to the other for changing at least one of the minimum Euclidean distance (D2) and the maximum Euclidean distance (D3), wherein the MEMS spectrometer is configured to scan a range of desired wavelengths when the substantially transparent substrates (20, 28) are inclined in relation to each other,
   **characterized by** further comprising a MEMS silicon substrate (36), first and second MEMS electrodes (42a-42d), and at least first and second MEMS springs affixed to the MEMS silicon substrate, the first and second MEMS electrodes (42a-42d) are mechanically connected to the first and second MEMS springs (38); wherein an adjustment of voltage between first and second MEMS electrodes (42a-42d) causes a corresponding MEMS spring (38) to flex and change at least one of the minimum Euclidean distance (D2) and the maximum Euclidean distance (D3).

2. The apparatus of claim 1, wherein the MEMS actuator converts a voltage into a mechanical output for performing the inclining; wherein the MEMS actuator (30) comprises a plurality of pairs of electrodes (42a-42d) defining the voltage therebetween.

3. The apparatus of claim 1, wherein the MEMS silicon substrate (36) comprises a central aperture (34) formed around the optical detector.

4. The apparatus of any of claims 1 to 3, further comprising at least one of an optical controller, a voltage controller, a current controller, a piezo-electric controller, and an inductive controller for controlling the positioning of the upper and lower substantially transparent substrates.

5. The apparatus of any of claims 1 to 4, wherein the plurality of wavelengths comprise a minimum wavelength and a maximum wavelength, the minimum Euclidean distance (D2) is equivalent to the minimum wavelength multiplied by n and divided by 4, and the maximum Euclidean distance (D3) is equivalent to the maximum wavelength multiplied by $n$ and divided by 4, $n$ being an integer.

6. The apparatus of claim 5, further comprising a processor adapted to calculate a target minimum Euclidean distance and a target maximum Euclidean distance between the upper and lower substantially transparent substrates (20, 28) required to detect transmission of a desired spectrum of wavelengths, wherein the desired spectrum of wavelengths comprises a target minimum wavelength and a target maximum wavelength, and the processor is adapted to calculate the target minimum Euclidean distance as the target minimum wavelength multiplied by n and divided by 4, and the target maximum Euclidean distance as the target maximum wavelength multiplied by n and divided by 4, and is further configured to instruct the MEMS actuator (30) to incline at least one of the upper and lower substantially transparent substrates (20, 28) in relation to the other and thereby adjust the minimum and maximum Euclidean distances (D2, D3) according to the desired spectrum of wavelengths.

7. The apparatus of any of claims 1 to 6, further comprising a device configured to transmit light of a predetermined wavelength through the upper and lower substantially transparent substrates (20, 28), and a processor configured to calibrate a correlation between the minimum and maximum Euclidean distances (D2, D3) and the capture of the plurality of different wavelengths based on capturing of said light by the optical detector.

8. The apparatus of any of claims 1 to 7, wherein the spectrometer is configured within a battery-operated mobile Raman scattering device (210).

9. A method comprising:

adjusting a minimum Euclidean distance (D2) and a maximum Euclidean distance (D3) between upper and lower substantially transparent substrates in a microelectromechanical (MEMS) spectrometer so that the minimum and maximum Euclidean distances (D2, D3) differ from each other, said adjusting step comprising using a MEMS actuator (30) to incline at least one of the upper and lower substantially transparent substrates (20, 28) in relation to the other;

transmitting a plurality of different wavelengths of light through the upper and lower substantially transparent substrates (20, 28) that are inclined in relation to one another and to an optical detector; and

capturing light in a plurality of different wavelengths in a single transmission with the optical detector,

wherein the MEMS spectrometer comprises a MEMS machine comprising a MEMS silicon substrate (36), first and second MEMS electrodes (42a-42d), and at least first and second MEMS springs (38) affixed to the MEMS silicon substrate (36), the first and second MEMS electrodes (42a-42d) are mechanically connected to the first and second MEMS springs (38); and

wherein the adjusting step comprises adjusting the voltage between first and second MEMS electrodes (42a-42d) to thereby cause a corresponding MEMS spring (38) to flex, and change at least one of the minimum Euclidean distance (D2) and the maximum Euclidean distance (D3).

10. The method of claim 9, wherein the MEMS actuator (30) comprises a plurality of pairs of electrodes (42a-42d) defining a voltage therebetween, and wherein the step of using the MEMS actuator (30) comprises converting the voltage into a mechanical output for performing the inclining.

11. The method of claim 10, further comprising measuring a capacitive readout between respective paired electrodes (42a-42d), and calculating based on the capacitive readout the distance between the respective paired electrodes (42a-42d).

12. The method of any of claims 9 to 11, wherein the plurality of different wavelengths comprises a minimum wavelength and a maximum wavelength, the minimum Euclidean distance (D2) is equivalent to the minimum wavelength multiplied by n and divided by 4, and the maximum Euclidean distance (D3) is equivalent to the maximum wavelength multiplied by $n$ and divided by 4, $n$ being an integer.

13. The method of claim 12, further comprising: calculating a target minimum Euclidean distance and a target maximum Euclidean distance required to detect transmission of a desired spectrum of wavelengths, wherein the desired spectrum of wavelengths comprise a target minimum wavelength and a target maximum wavelength, and said calculating comprises calculating the target minimum Euclidean distance as the target minimum wavelength multiplied by n and divided by 4, and calculating the target maximum Euclidean distance as the target maximum wavelength multiplied by n and divided by 4; using the MEMS actuator (30) to incline at least one of the upper and lower substantially transparent substrates (20, 28) in relation to the other and thereby adjust the minimum and maximum Euclidean distances (D2, D3) according to the desired spectrum of wavelengths, and wherein the detecting step further comprises detecting the transmission of the desired spectrum of wavelengths.

14. The method of claim 13, further comprising:

analyzing the range of transmitted wavelengths captured by the optical detector;
selecting a subset of the desired spectrum of the transmitted wavelengths;
calculating a second target minimum Euclidean distance and a second target maximum Euclidean distance required to detect transmission of the subset of the desired spectrum of wavelengths at a desired resolution;
using the MEMS actuator (30) to incline at least one of the upper and lower substantially transparent substrates (20, 28) in relation to the other and thereby adjust the minimum and maximum Euclidean distances (D2, D3) according to the calculated subset of the desired spectrum of wavelengths at the desired resolution,
transmitting a second transmission of the plurality of wavelengths through the upper and lower substantially transparent substrates (20, 28);
and capturing with the optical detector the transmission of the subset of the desired spectrum of wavelengths at the desired resolution.

15. The method of any of claims 9 to 14, further comprising transmitting light of a predetermined wavelength through the upper and lower substantially transparent substrates (20, 28), detecting transmission of said light with the optical detector, and calibrating a correlation between the minimum and maximum Euclidean distances (D2, D3) and the transmission of the plurality of different wavelengths based on the detected transmission of said light.

**Patentansprüche**

1. Mikroelektromechanisches (MEMS) Spektrometer, umfassend:

ein im Wesentlichen transparentes oberes Substrat (20);
ein im Wesentlichen transparentes unteres Substrat (28);
einen optischen Detektor, der angebracht ist, um Licht zu erfassen, das in einer einzigen Übertragung durch das obere und das untere im Wesentlichen transparente Substrat (20, 28) in einer Vielzahl von unterschiedlichen Wellenlängen übertragen wird, wenn sich ein minimaler euklidischer Abstand (D2) und ein maximaler euklidischer Abstand (D3) zwischen dem oberen und dem unteren Substrat (20, 28) voneinander unterscheiden; und
einen MEMS-Aktuator (30), der dazu konfiguriert ist, mindestens eines des oberen und des unteren im Wesentlichen transparenten Substrates (20, 28) im Verhältnis zueinander zu neigen, um mindestens einen von dem minimalen euklidischen Abstand (D2) und dem maximalen euklidischen Abstand (D3) zu ändern, wobei das MEMS-Spektrometer dazu konfiguriert ist, einen Bereich von gewünschten Wellenlängen abzutasten, wenn die im Wesentlichen transparenten Substrate (20, 28) im Verhältnis zueinander geneigt sind,
**dadurch gekennzeichnet, dass** es ferner ein MEMS-Siliziumsubstrat (36), erste und zweite MEMS-Elektroden (42a-42d) und mindestens erste und zweite MEMS-Federn, die an dem MEMS-Siliziumsubstrat befestigt sind, umfasst, wobei die ersten und die zweiten MEMS-Elektroden (42a-42d) mechanisch mit den ersten und den zweiten MEMS-Federn (38) verbunden sind; wobei eine Anpassung der Spannung zwischen den ersten und den zweiten MEMS-Elektroden (42a-42d) eine entsprechende MEMS-Feder (38) dazu veranlasst, sich zu biegen und mindestens einen von dem minimalen euklidischen Abstand (D2) und dem maximalen euklidischen Abstand (D3) zu ändern.

2. Vorrichtung nach Anspruch 1, wobei der MEMS-Aktuator eine Spannung in eine mechanische Leistung zum Durchführen der Neigung umwandelt; wobei der MEMS-Aktuator (30) eine Vielzahl von Elektrodenpaaren (42a-42d) umfasst, welche die Spannung dazwischen definieren.

3. Vorrichtung nach Anspruch 1, wobei das MEMS-Siliziumsubstrat (36) eine zentrale Öffnung (34) umfasst, die um den optischen Detektor herum ausgebildet ist.

4. Vorrichtung nach einem der Ansprüche 1 bis 3, ferner umfassend mindestens eine von einer optischen Steuerung, einer Spannungssteuerung, einer Stromsteuerung, einer piezoelektrischen Steuerung und einer induktiven Steuerung zum Steuern der Positionierung des oberen und des unteren im Wesentlichen transparenten Substrats.

5. Vorrichtung nach einem der Ansprüche 1 bis 4, wobei die Vielzahl von Wellenlängen eine minimale Wellenlänge und eine maximale Wellenlänge umfasst, der minimale euklidische Abstand (D2) der minimalen Wellenlänge multipliziert mit n und dividiert durch 4 entspricht und der maximale euklidische Abstand (D3) der maximalen Wellenlänge multipliziert mit n und dividiert durch 4 entspricht, wobei n eine ganze Zahl ist.

6. Vorrichtung nach Anspruch 5, die ferner einen Prozessor umfasst, der dazu ausgelegt ist, einen angestrebten minimalen euklidischen Abstand und einen angestrebten maximalen euklidischen Abstand zwischen dem oberen und dem unteren im Wesentlichen transparenten Substrat (20, 28) zu berechnen, die erforderlich sind, um die Übertragung eines gewünschten Wellenlängenspektrums zu erfassen, wobei das gewünschte Wellenlängenspektrum eine angestrebte minimale Wellenlänge und eine angestrebte maximale Wellenlänge umfasst und der Prozessor dazu ausgelegt ist, den angestrebten minimalen euklidischen Abstand als die angestrebte minimale Wellenlänge multipliziert mit n und dividiert durch 4 und den angestrebten maximalen euklidischen Abstand als die angestrebte maximale Wellenlänge multipliziert mit n und dividiert durch 4 zu berechnen, und ferner dazu konfiguriert ist, den MEMS-Aktuator (30) anzuweisen, mindestens eines des oberen und des unteren im Wesentlichen transparenten Substrates (20, 28) im Verhältnis zueinander zu neigen und dadurch den minimalen und den maximalen euklidischen Abstand (D2, D3) gemäß dem gewünschten Wellenlängenspektrum anzupassen.

7. Vorrichtung nach einem der Ansprüche 1 bis 6, ferner umfassend eine Vorrichtung, die dazu konfiguriert ist, Licht einer vorbestimmten Wellenlänge durch das obere und das untere im Wesentlichen transparente Substrat (20, 28) zu übertragen, und einen Prozessor, der dazu konfiguriert ist, eine Korrelation zwischen dem minimalen und dem maximalen euklidischen Abstand (D2, D3) und der Erfassung der Vielzahl von unterschiedlichen Wellenlängen auf der Grundlage der Erfassung des Lichts durch den optischen Detektor zu kalibrieren.

8. Vorrichtung nach einem der Ansprüche 1 bis 7, wobei das Spektrometer in einer batteriebetriebenen mobilen Raman-Streuvorrichtung (210) konfiguriert ist.

9. Verfahren, umfassend:

Anpassen eines minimalen euklidischen Abstands (D2) und eines maximalen euklidischen Abstands (D3) zwischen einem oberen und einem unteren im Wesentlichen transparenten Substrat in einem mikroelektromechanischen (MEMS) Spektrometer, sodass sich der minimale und der maximale euklidischen Abstand (D2, D3) voneinander unterscheiden, wobei der Schritt des Anpassens Verwenden eines MEMS-Aktuators (30) umfasst, um mindestens eines des oberen und des unteren im Wesentlichen transparenten Substrates (20, 28) im Verhältnis zueinander zu neigen;
Übertragen einer Vielzahl von unterschiedlichen Wellenlängen von Licht durch das obere und das untere im Wesentlichen transparente Substrat (20, 28), die zueinander und zu einem optischen Detektor geneigt sind; und Erfassen von Licht in einer Vielzahl von unterschiedlichen Wellenlängen in einer einzigen Übertragung mit dem optischen Detektor,
wobei das MEMS-Spektrometer eine MEMS-Maschine umfasst, die ein MEMS-Siliziumsubstrat (36), erste und zweite MEMS-Elektroden (42a-42d) und mindestens erste und zweite MEMS-Federn (38) umfasst, die an dem MEMS-Siliziumsubstrat (36) befestigt sind, wobei die ersten und die zweiten MEMS-Elektroden (42a-42d) mechanisch mit den ersten und den zweiten MEMS-Federn (38) verbunden sind; und
wobei der Schritt des Anpassens Anpassen der Spannung zwischen den ersten und den zweiten MEMS-Elektroden (42a-42d) umfasst, um dadurch eine entsprechende MEMS-Feder (38) zu veranlassen, sich zu biegen und mindestens einen von dem minimalen euklidischen Abstand (D2) und dem maximalen euklidischen Abstand (D3) zu ändern.

10. Verfahren nach Anspruch 9, wobei der MEMS-Aktuator (30) eine Vielzahl von Elektrodenpaaren (42a-42d) umfasst, die dazwischen eine Spannung definieren, und wobei der Schritt des Verwendens des MEMS-Aktuators (30) Umwandeln der Spannung in eine mechanische Leistung zum Durchführen der Neigung umfasst.

11. Verfahren nach Anspruch 10, ferner umfassend Messen einer kapazitiven Anzeige zwischen den jeweiligen gepaarten Elektroden (42a-42d) und Berechnen des Abstands zwischen den jeweiligen gepaarten Elektroden (42a-42d) auf der Grundlage der kapazitiven Anzeige.

12. Verfahren nach einem der Ansprüche 9 bis 11, wobei die Vielzahl von unterschiedlichen Wellenlängen eine minimale Wellenlänge und eine maximale Wellenlänge umfasst, der minimale euklidische Abstand (D2) der minimalen Wellenlänge multipliziert mit n und dividiert durch 4 entspricht und der maximale euklidische Abstand (D3) der maximalen Wellenlänge multipliziert mit n und dividiert durch 4 entspricht, wobei n eine ganze Zahl ist.

13. Verfahren nach Anspruch 12, ferner umfassend: Berechnen eines angestrebten minimalen euklidischen Abstands und eines angestrebten maximalen euklidischen Abstands, die erforderlich sind, um die Übertragung eines gewünschten Wellenlängenspektrums zu erfassen, wobei das gewünschte Wellenlängenspektrum eine angestrebte minimale Wellenlänge und eine angestrebte maximale Wellenlänge umfasst, und wobei das Berechnen Berechnen des angestrebten minimalen euklidischen Abstands als die angestrebte minimale Wellenlänge multipliziert mit n und dividiert durch 4 und Berechnen des angestrebten maximalen euklidischen Abstands als die angestrebte maximale Wellenlänge multipliziert mit n und dividiert durch 4 umfasst; Verwenden des MEMS-Aktuators (30), um mindestens eines des oberen und des unteren im Wesentlichen transparenten Substrates (20, 28) im Verhältnis zueinander zu neigen und dadurch den minimalen und den maximalen euklidischen Abstand (D2, D3) gemäß dem gewünschten Wellenlängenspektrum anzupassen, und wobei der Schritt des Erfassens ferner Erfassen der Übertragung des gewünschten Wellenlängenspektrums umfasst.

**14.** Verfahren nach Anspruch 13, ferner umfassend:

Analysieren des Bereichs der übertragenen Wellenlängen, die von dem optischen Detektor erfasst wurden;

Auswählen einer Teilmenge des gewünschten Spektrums der übertragenen Wellenlängen;

Berechnen eines zweiten angestrebten minimalen euklidischen Abstands und eines zweiten angestrebten maximalen euklidischen Abstands, die erforderlich sind, um eine Übertragung der Teilmenge des gewünschten Wellenlängenspektrums in einer gewünschten Auflösung zu erfassen;

Verwenden des MEMS-Aktuators (30), um mindestens eines des oberen und des unteren im Wesentlichen transparenten Substrates (20, 28) im Verhältnis zueinander zu neigen und dadurch den minimalen und den maximalen euklidischen Abstand (D2, D3) gemäß der berechneten Teilmenge des gewünschten Wellenlängenspektrums in der gewünschten Auflösung anzupassen,

Senden einer zweiten Übertragung der Vielzahl von Wellenlängen durch das obere und das untere im Wesentlichen transparente Substrat (20, 28);

und Erfassen, mit dem optischen Detektor, der Übertragung der Teilmenge des gewünschten Wellenlängenspektrums in der gewünschten Auflösung.

**15.** Verfahren nach einem der Ansprüche 9 bis 14, ferner umfassend Übertragen von Licht einer vorbestimmten Wellenlänge durch das obere und das untere im Wesentlichen transparente Substrat (20, 28), Erfassen der Übertragung des Lichts mit dem optischen Detektor und Kalibrieren einer Korrelation zwischen dem minimalen und dem maximalen euklidischen Abstand (D2, D3) und der Übertragung der Vielzahl von unterschiedlichen Wellenlängen auf der Grundlage der erfassten Übertragung des Lichts.

**Revendications**

**1.** Spectromètre microélectromécanique (MEMS), comprenant :

un substrat supérieur sensiblement transparent (20) ;

un substrat inférieur sensiblement transparent (28) ;

un détecteur optique monté pour capturer la lumière transmise en une seule transmission à travers les substrats supérieur et inférieur sensiblement transparents (20, 28) dans une pluralité de longueurs d'onde différentes lorsqu'une distance euclidienne minimale (D2) et une distance euclidienne maximale (D3) entre les substrats supérieur et inférieur (20, 28) diffèrent l'une de l'autre ; et

un actionneur MEMS (30) configuré pour incliner au moins l'un des substrats supérieur et inférieur sensiblement transparents (20, 28) par rapport à l'autre pour modifier au moins l'une parmi la distance euclidienne minimale (D2) et la distance euclidienne maximale (D3), dans lequel le spectromètre MEMS est configuré pour balayer une plage de longueurs d'onde souhaitées lorsque les substrats sensiblement transparents (20, 28) sont inclinés l'un par rapport à l'autre,

**caractérisé en ce qu'**il comprend en outre un substrat de silicium MEMS (36), des première et seconde électrodes MEMS (42a-42d), et au moins des premier et second ressorts MEMS fixés au substrat de silicium MEMS, les première et seconde électrodes MEMS (42a-42d) sont connectées mécaniquement aux premier et second ressorts MEMS (38) ; dans lequel un ajustement de tension entre les première et seconde électrodes MEMS (42a-42d) amène un ressort MEMS correspondant (38) à fléchir et à modifier au moins l'une parmi la distance euclidienne minimale (D2) et la distance euclidienne maximale (D3) .

**2.** Appareil selon la revendication 1, dans lequel l'actionneur MEMS convertit une tension en une sortie mécanique pour effectuer l'inclinaison ; dans lequel l'actionneur MEMS (30) comprend une pluralité de paires d'électrodes (42a-42d) définissant la tension entre elles.

**3.** Appareil selon la revendication 1, dans lequel le substrat de silicium MEMS (36) comprend une ouverture centrale (34) formée autour du détecteur optique.

**4.** Appareil selon l'une quelconque des revendications 1 à 3, comprenant en outre au moins l'un parmi un contrôleur optique, un contrôleur de tension, un contrôleur de courant, un contrôleur piézoélectrique et un contrôleur inductif pour commander le positionnement des substrats supérieur et inférieur sensiblement transparents.

**5.** Appareil selon l'une quelconque des revendications 1 à 4, dans lequel la pluralité de longueurs d'onde comprend une longueur d'onde minimale et une longueur d'onde maximale, la distance euclidienne minimale (D2) est équivalente à la longueur d'onde minimale multipliée par n et divisée par 4, et la distance euclidienne maximale (D3) est équivalente à la longueur d'onde maximale multipliée par n et divisée par 4, n étant un nombre entier.

**6.** Appareil selon la revendication 5, comprenant en outre un processeur adapté pour calculer une distance euclidienne minimale cible et une distance euclidienne maximale cible entre les substrats supérieur et inférieur sensiblement transparents (20, 28) nécessaires pour détecter la transmission d'un spectre souhaité de longueurs d'onde, dans lequel le spectre souhaité de longueurs d'onde comprend une longueur d'onde minimale cible et une longueur d'onde maximale cible, et le processeur est adapté pour calculer la distance euclidienne minimale cible comme étant la longueur d'onde minimale cible multipliée par n et divisée par 4, et la distance euclidienne maximale cible comme étant la longueur d'onde maximale cible multipliée par n et divisée par 4, et est en outre configuré pour ordonner à l'actionneur MEMS (30) d'incliner au moins l'un parmi les substrats supérieur et inférieur sensiblement transparents (20, 28) par rapport à l'autre et ainsi ajuster les distances euclidiennes minimale et maximale (D2, D3) en fonction du spectre souhaité de longueurs d'onde.

**7.** Appareil selon l'une quelconque des revendications 1 à 6, comprenant en outre un dispositif configuré pour transmettre une lumière d'une longueur d'onde prédéterminée à travers les substrats supérieur et inférieur sensiblement transparents (20, 28), et un processeur configuré pour calibrer une corrélation entre les distances euclidiennes minimale et maximale (D2, D3) et la capture de la pluralité de longueurs d'onde différentes sur la base de la capture de ladite lumière par le détecteur optique.

**8.** Appareil selon l'une quelconque des revendications 1 à 7, dans lequel le spectromètre est configuré à l'intérieur d'un dispositif de diffusion Raman mobile fonctionnant sur batterie (210) .

**9.** Procédé comprenant :

l'ajustement d'une distance euclidienne minimale (D2) et d'une distance euclidienne maximale (D3) entre des substrats supérieur et inférieur sensiblement transparents dans un spectromètre microélectromécanique (MEMS) de sorte que les distances euclidiennes minimale et maximale (D2, D3) diffèrent l'une de l'autre, ladite étape d'ajustement comprenant l'utilisation d'un actionneur MEMS (30) pour incliner au moins l'un des substrats supérieur et inférieur sensiblement transparents (20, 28) par rapport à l'autre ;
la transmission d'une pluralité de longueurs d'onde différentes de lumière à travers les substrats supérieur et inférieur sensiblement transparents (20, 28) qui sont inclinés l'un par rapport à l'autre et par rapport à un détecteur optique ; et
la capture de la lumière dans une pluralité de longueurs d'onde différentes en une seule transmission avec le détecteur optique,
dans lequel le spectromètre MEMS comprend une machine MEMS comprenant un substrat de silicium MEMS (36), des première et seconde électrodes MEMS (42a-42d), et au moins des premier et second ressorts MEMS (38) fixés au substrat de silicium MEMS (36), les première et seconde électrodes MEMS (42a-42d) sont connectées mécaniquement aux premier et second ressorts MEMS (38) ; et
dans lequel l'étape d'ajustement comprend l'ajustement de la tension entre les première et seconde électrodes MEMS (42a-42d) pour ainsi amener un ressort MEMS (38) correspondant à fléchir, et modifier au moins l'une parmi la distance euclidienne minimale (D2) et la distance euclidienne maximale (D3) .

**10.** Procédé selon la revendication 9, dans lequel l'actionneur MEMS (30) comprend une pluralité de paires d'électrodes (42a-42d) définissant une tension entre elles, et dans lequel l'étape d'utilisation de l'actionneur MEMS (30) comprend la conversion de la tension en une sortie mécanique pour effectuer l'inclinaison.

**11.** Procédé selon la revendication 10, comprenant en outre la mesure d'une lecture capacitive entre des électrodes appariées (42a-42d) respectives, et le calcul, sur la base de la lecture capacitive, de la distance entre les électrodes appariées (42a-42d) respectives.

**12.** Procédé selon l'une quelconque des revendications 9 à 11, dans lequel la pluralité de longueurs d'onde différentes comprend une longueur d'onde minimale et une longueur d'onde maximale, la distance euclidienne minimale (D2) est équivalente à la longueur d'onde minimale multipliée par n et divisée par 4, et la distance euclidienne maximale (D3) est équivalente à la longueur d'onde maximale multipliée par n et divisée par 4, *n* étant un nombre entier.

**13.** Procédé selon la revendication 12, comprenant en outre :
le calcul d'une distance euclidienne minimale cible et d'une distance euclidienne maximale cible requises pour détecter la transmission d'un spectre souhaité de longueurs d'onde, dans lequel le spectre souhaité de longueurs d'onde comprend une longueur d'onde minimale cible et une longueur d'onde maximale cible, et ledit calcul comprend le calcul de la distance euclidienne minimale cible comme étant la longueur d'onde minimale cible multipliée par n et divisée par 4, et le calcul de la distance euclidienne maximale cible comme étant la longueur d'onde maximale cible multipliée par n et divisée par 4 ; l'utilisation de l'actionneur MEMS (30) pour incliner au moins l'un des substrats supérieur et inférieur sensiblement transparents (20, 28) par rapport à l'autre et ainsi ajuster les distances euclidiennes minimale et maximale (D2, D3) en fonction du spectre souhaité de longueurs d'onde, et dans lequel l'étape de détection comprend en outre la détection de la transmission du spectre souhaité de longueurs d'onde.

**14.** Procédé selon la revendication 13, comprenant en outre :

l'analyse de la plage de longueurs d'onde transmises capturées par le détecteur optique ;
la sélection d'un sous-ensemble du spectre souhaité des longueurs d'onde transmises ;
le calcul d'une seconde distance euclidienne minimale cible et d'une seconde distance euclidienne maximale cible requises pour détecter la transmission du sous-ensemble du spectre souhaité de longueurs d'onde à une résolution souhaitée ;
l'utilisation de l'actionneur MEMS (30) pour incliner au moins l'un des substrats supérieur et inférieur sensiblement transparents (20, 28) par rapport à l'autre et ainsi ajuster les distances euclidiennes minimale et maximale (D2, D3) en fonction du sous-ensemble calculé du spectre souhaité de longueurs d'onde à la résolution souhaitée,
la transmission d'une seconde transmission de la pluralité de longueurs d'onde à travers les substrats supérieur et inférieur sensiblement transparents (20, 28) ;
et la capture avec le détecteur optique de la transmission du sous-ensemble du spectre souhaité de longueurs d'onde à la résolution souhaitée.

**15.** Procédé selon l'une quelconque des revendications 9 à 14, comprenant en outre la transmission d'une lumière d'une longueur d'onde prédéterminée à travers les substrats supérieur et inférieur sensiblement transparents (20, 28), la détection de la transmission de ladite lumière avec le détecteur optique, et l'étalonnage d'une corrélation entre les distances euclidiennes minimale et maximale (D2, D3) et la transmission de la pluralité de longueurs d'onde différentes sur la base de la transmission détectée de ladite lumière.

# FIG. 1

# FIG. 2A

# FIG. 2B

## FIG. 3

## FIG. 4

FIG. 5A

FIG. 5B

FIG. 5C

# FIG. 6

Determine Initial Scanning Distances — 101

Read Electrode Position — 102

Fix Electrodes — 103

Scan Full Range — 104

Identify Regions — 105

Repeat at high resolution — 106

Repeat at higher resolution — 107

Combine data for readout — 108

# FIG. 7

## REFERENCES CITED IN THE DESCRIPTION

**Patent documents cited in the description**

- DE 102009021936 A1
- US 2008187011 A1
- US 2018205915 A1
- US 2003011864 A1